(19) Europäisches Patentamt
European Patent Office
Office européen des brevets

(11) **EP 4 760 597 A1**

(12) **EUROPEAN PATENT APPLICATION**

(43) Date of publication:
**17.06.2026 Bulletin 2026/25**

(21) Application number: **25223696.3**

(22) Date of filing: **16.12.2025**

(51) International Patent Classification (IPC):
**G06N 3/045** (2023.01)     **G06N 3/047** (2023.01)
**G06N 3/0475** (2023.01)     **G06N 3/0495** (2023.01)
**G06N 3/084** (2023.01)     **G06N 3/0895** (2023.01)
*G01S 17/931* (2020.01)     *G06V 10/82* (2022.01)
*G06V 20/56* (2022.01)

(52) Cooperative Patent Classification (CPC):
**G06N 3/045; G06N 3/047; G06N 3/0475;
G06N 3/0495; G06N 3/084; G06N 3/0895;
G06V 10/82; G06V 20/56;** G01S 17/931

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.12.2024 US 202418983223**

(71) Applicant: **Waymo LLC**
**Mountain View, CA 94043 (US)**

(72) Inventors:
• **KINI, Jyoti**
**Mountain View, CA 94043 (US)**

• **CAI, Tianyi**
**Mountain View, CA 94043 (US)**
• **CICEK, Bayram Safa**
**Mountain View, CA 94043 (US)**
• **YANG, Zhibo**
**Mountain View, CA 94043 (US)**
• **ZHANG, Jiakai**
**Mountain View, CA 94043 (US)**
• **AYVACI, Alper**
**Mountain View, CA 94043 (US)**

(74) Representative: **Chettle, John Edward et al**
**Venner Shipley LLP**
**TIDE Bankside**
**8 Emerson Street**
**London SE1 9DU (GB)**

(54) **TRAINING NEURAL NETWORKS FOR SENSOR DATA REPRESENTATION LEARNING THROUGH FUTURE FRAME PREDICTION**

(57)     Methods, systems, and apparatus, including computer programs encoded on a computer storage medium, for obtaining respective sensor data captured by one or more sensors of an autonomous vehicle at each of a sequence of time steps, the sequence of time steps comprising one or more context time steps followed by one or more prediction time steps; generating respective ground truth birds-eye-view (BEV) representations of the respective sensor data for each of the prediction time steps; for each prediction time step, processing the respective sensor data at one or more preceding time steps in the sequence using a future prediction neural network to generate a predicted BEV representation for the prediction time step; and training the future prediction neural network based on, for each prediction time step, an error between the ground truth BEV representation for the prediction time step and the predicted BEV representation for the prediction time step.

EP 4 760 597 A1

**Description**

BACKGROUND

This specification relates to training a neural network to make predictions from sensor data captured by sensors of a vehicle in an environment.

Neural networks are machine learning models that employ one or more layers of nonlinear units to predict an output for a received input. Some neural networks include one or more hidden layers in addition to an output layer. The output of each hidden layer is used as input to one or more layers in the network, i.e., one or more other hidden layers, the output layer, or both. Each layer of the network generates an output from a received input in accordance with current values of a respective set of parameters.

BRIEF DESCRIPTION OF THE DRAWINGS

FIG. 1 shows a block diagram of an example system.
FIG. 2 is a flow diagram of an example process for training a future prediction neural network.
FIG. 3 shows an example of the training of the future prediction neural network.
FIG. 4 shows another example of the training of the future prediction neural network with additional target position data of the vehicle at each respective context time step.
FIG. 5 shows an example future prediction neural network with a learned quantization applied to discrete encoded representations of sensor data.

Like reference numbers and designations in the various drawings indicate like elements.

DETAILED DESCRIPTION

This specification generally describes techniques for training a neural network that generates representations of sensor data, e.g., camera images, lidar sensor readings, or radar sensor readings, generated by one or more sensors of an autonomous vehicle.

After training, the representations generated by the neural network can be used, e.g., on-board an autonomous vehicle for a variety of prediction tasks. In particular, the neural network includes an encoder neural network that receives perspective-view sensor data and generates a bird's eye view (BEV), top-down representation of the sensor data.

"Perspective view" generally refers to a representation of sensor data in a coordinate system as viewed from the perspective of a respective sensor capturing the sensor data. "BEV" generally refers to a representation of sensor data in a top-down coordinate system centered at the vehicle.

Autonomous vehicles generate a large amount of sensor data as these vehicles navigate through environments. However, using this sensor data to train neural networks that generate representations of this sensor data that are useful for downstream tasks is a difficult problem. In particular, labeling this sensor data with ground truth labels for the downstream tasks can be time consuming and, in many cases, infeasible.

This specification addresses these issues by training the neural network on a task that requires using the encoded representations generated by the neural network to perform next frame prediction. In particular, during training, the encoded representations generated by the neural network for one or more context time steps are processed by a temporal decoder neural network to generate a respective prediction of BEV features at future time steps. By training the neural network on this task, the large amount of sensor data is automatically leveraged, because the "ground truth" predictions at future time steps are already directly available from the sensor data captured at those future time steps. In addition, by training the neural network on this task, the representations encode information that is necessary to accurately predict future BEV features and therefore encode information that is relevant to many different downstream tasks. For example, although the training is performed in an unsupervised manner, the representations will encode information relating to object position and motion, which is not only necessary to predict future features, but also necessary for many different downstream tasks, e.g., object detection, trajectory planning, behavior prediction, and so on.

Additionally, when generating predictions of the future environment surrounding a vehicle, ambiguity exists in what actions both the vehicle and the other agents in the environment will perform between the current time step and the next prediction time step. For example, to generate a future frame prediction for a vehicle stopped at a stop sign at the current time step, there is ambiguity in whether the vehicle will turn left, turn right, or go straight, and what the other agents in the current frame will do, at the next time step. This ambiguity may cause the future prediction neural network to generate blurry feature predictions, i.e., because the future prediction neural network is interpolating between many different possible outcomes. This can reduce the quality of the training signal that is provided to the encoder neural network. This specification describes various techniques for reducing this ambiguity and improving the quality of the training. For example, to reduce this ambiguity and allow the future prediction neural network to generate clearer feature predictions for a given future frame, input data corresponding to the time step can be conditioned with a target position of the vehicle at the time step. As another example, the system can incorporate a learned quantization on the output of the sensor encoder neural network so that the input to the temporal decoder is a discrete representation of the sensor data.

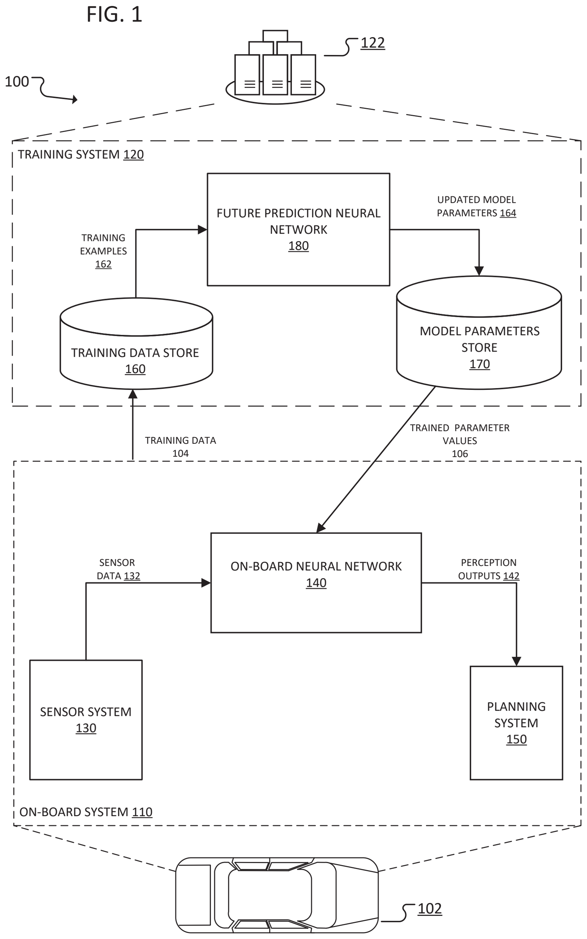

FIG. 1 is a diagram of an example system 100. The system 100 includes an on-board system 110 and a training system 120.

The on-board system 110 is physically located on-board a vehicle 102. The vehicle 102 in FIG. 1 is illustrated as an automobile, but the on-board system 102 can be located on-board any appropriate vehicle type. In some cases, the vehicle 102 is an autonomous vehicle. An autonomous vehicle can be a fully autonomous vehicle that determines and executes fully-autonomous driving decisions in order to navigate through an environment. An autonomous vehicle can also be a semi-autonomous vehicle that uses predictions to aid a human driver. For example, the autonomous vehicle 102 can autonomously apply the brakes if a planning output indicates that a human driver is about to collide with another vehicle. As another example, the vehicle 102 can have an advanced driver assistance system (ADAS) that assists a human driver of the vehicle 102 in driving the vehicle 102 by detecting potentially unsafe situations and alerting the human driver or otherwise responding to the unsafe situation. As a particular example, the vehicle 102 can alert the driver of the vehicle 102 or take an autonomous driving action when an obstacle is detected, when the vehicle departs from a driving lane, or when an object is detected in a blind spot of the human driver.

The on-board system 110 includes a sensor system 130. The sensor system 130 includes one or more sensors, some of which are configured to receive reflections of electromagnetic radiation from the environment in the vicinity of the vehicle 102. For example, the sensor system 130 can include one or more laser sensors (e.g., LIDAR sensors) that are configured to detect reflections of laser light. As another example, the sensor system 130 can include one or more radar sensors that are configured to detect reflections of radio waves. As another example, the sensor system 130 can include one or more camera sensors that are configured to detect reflections of visible light.

The sensor system 130 repeatedly (i.e., at each of multiple time points) uses raw sensor measurements, data derived from raw sensor measurements, or both to generate sensor data 132. The raw sensor measurements indicate the directions, intensities, and distances travelled by reflected radiation. For example, a sensor in the sensor system 130 can transmit one or more pulses of electromagnetic radiation in a particular direction and can measure the intensity of any reflections as well as the time that the reflection was received. A distance can be computed by determining the time which elapses between transmitting a pulse and receiving its reflection. Each sensor can continually sweep a particular space in angle, azimuth, or both. Sweeping in azimuth, for example, can allow a sensor to detect multiple objects along the same line of sight.

The training system 120 is typically hosted within a data center 122, which can be a distributed computing system having hundreds or thousands of computers in one or more locations.

The training system 120 trains a future prediction neural network 180 using training examples 162. The training examples 162 can be generated from a training data store 160 that stores training data 104, e.g., obtained from the on-board system 110. Each training example 162 includes sensor data for a sequence of time steps.

At each of the sequence of time steps in a training example 162, the sensor data can be collected from one or more sensors configured to detect signals of either the same or different type. For example, the sensor data can include data generated by LIDAR sensors, radar sensors, camera sensors, or a combination of such sensors.

Upon receiving a training example 162 as input, the future prediction neural network 180 generates a prediction for a time step based on sensor data at one or more preceding time steps. That is, given sensor data at one or more preceding time steps, the future prediction neural network 180 can generate a respective prediction for one or more subsequent time steps. More specifically, the respective prediction for each of the subsequent time steps are birds eye view (BEV) features of the environment surrounding the vehicle, i.e., in a top-down coordinate system centered at the vehicle, at the subsequent time step.

Additionally, to perform the training for each training example and for each time step for which the future prediction neural network 180 generated a prediction, the training system 120 can determine a BEV ground truth for the time step by converting the respective sensor data for the time step from a perspective view coordinate system to a BEV coordinate system.

For example, when the sensor data includes LIDAR data represented as a point cloud, the BEV ground truth for a time step can be a representation of the LIDAR points in the point cloud in the BEV coordinate system. That is, the BEV ground truth can include some or all of the points in the point cloud represented in the BEV coordinate system.

As another example, when the sensor data includes LIDAR data, the BEV ground truth can be perspective view features determined from the sensor data at the time step lifted to the BEV coordinate system using depth colocation with the LIDAR points.

The training system 120 can then analyze the error between the BEV ground truth and the BEV prediction generated and produce updated model parameter values 164 by using an appropriate updating technique e.g., stochastic gradient descent with backpropagation.

The model parameters store 170 is then updated with the updated model parameter values 164 from the future prediction neural network 180.

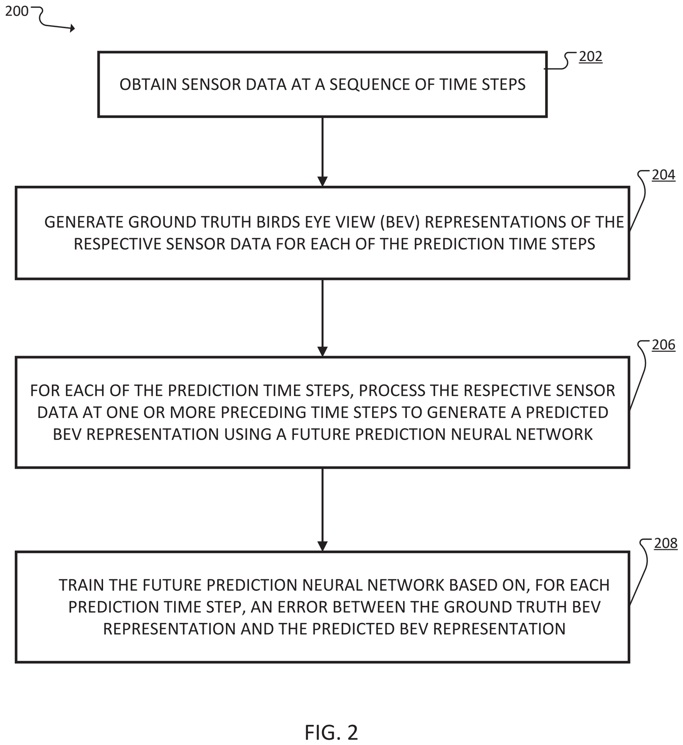

Training the future prediction neural network 180 is described in more detail below with reference to FIGS. 2-5.

After training, the training system 120 or the on-board system 110 can use the trained future prediction neural network 180 for any of a variety of purposes.

For example, the training system 120 can use the trained feature prediction neural network 180 for simulating the interactions of autonomous vehicles, e.g., as part of generating training data for machine learning models or as part of testing or evaluating control software for autonomous vehicles. For example, given sensor data captured by one or more sensors in perspective view for the current and past time steps or simulated sensor data that has already been generated for the current and past time steps, the training system 120 can use the trained future prediction neural network 180 in building a simulation of all agents and objects in the scene surrounding the vehicle 102 at a future time step from a BEV perspective.

As another example, the training system 120 can train an on-board neural network 140 that includes another prediction neural network in addition to a portion of the trained future prediction neural network 180 to generate perception outputs 142 for the execution one or more perception tasks, such as object tracking, segmentation, behavior prediction and object detection, onboard the vehicle.

That is, the training system 120 can train an on-board neural network 140 that includes a prediction neural network that receives, as input, an output generated by the portion of the future prediction neural network 180 and generates, as output, a prediction for one or more perception tasks.

For example, as will be described in more detail below, the future prediction neural network 180 can include an encoder that processes inputted sensor data into an encoded representation, a decoder that generates a prediction of a future frame in encoded representation, and a prediction neural network which predicts BEV features from future frame predictions. The portion of the future prediction neural network 180 that is part of the on-board neural network 140 can be the encoder, or both the encoder and the decoder.

To produce effective perception outputs 142 for the execution of one or more perception tasks, the training system 120 can perform further training of the on-board neural network 140 with training examples 162 generated from training data 102 produced by the on-board system 110. Once fully trained to produce updated model parameters 164, the training system 120 can provide the trained parameter values 106 to the on-board neural network 140, e.g., through a wired or wireless connection.

With trained parameter values 106 from the training system 120, the on-board neural network 140 can produce perception outputs 142.

The perception outputs 142 produced may, for example, be classification outputs that include respective scores representing the likelihood the input sensor data 132 characterizes an object belonging to each of one or more object categories. As another example, the perception outputs 142 can be object detection outputs that identify, and optionally label, objects in sensor data 132 by including data defining one or more bounding boxes around identified objects. As another example, the perception outputs 142 can be segmentation outputs that assign some or all of the pixels in a point cloud or pixels in an image a respective score for each of a set of object categories that represents a likelihood that the point or pixel measures an object from the object category.

Once the on-board neural network 140 is deployed on-board the vehicle, the on-board system 110 can input perception outputs 142 generated by the on-board neural network 140 to the planning system 150.

After receiving the perception outputs 142, the planning system 150 can use the perception outputs 142 to control the vehicle 102, i.e., by generating planning decisions for driving the vehicle 102 and then causing the vehicle 102 to carry out the planning decisions. The planning decisions generated by the planning system 150 can include, for example: yielding (e.g., to pedestrians identified in the perception outputs 142), stopping (e.g., at a "Stop" sign identified in the perception outputs 142), passing other vehicles identified in the perception outputs 142, adjusting vehicle lane position to accommodate a bicyclist identified in the perception outputs 142, slowing down in a school or construction zone, merging (e.g., onto a highway), and parking.

FIG. 2 is a flow diagram of an example process 200 for training a future prediction neural network. For convenience, the process 200 will be described as being performed by a system of one or more computers located in one or more locations. For example, a training system, e.g., the training system 120 of FIG. 1, appropriately programmed in accordance with this specification, can perform the process 200.

The system can repeatedly perform the process 200 for each of multiple training examples in order to train the future prediction neural network.

The system obtains sensor data at a sequence of time steps (step 202).

At each of the sequence of time steps, one or more sensors capture sensor data in perspective view. The system can divide the sequence of time steps into one or more context time steps followed by one or more prediction time steps. A context time step is a time step upon which the future prediction neural network bases its generated output prediction. A prediction time step is a time step for which the future prediction neural network generates as output a prediction of a vehicle's environment.

The system, for each of the prediction time steps, generates ground truth BEV representations of the respective sensor data (step 204). The system can generate ground truth BEV representations by converting the sensor data captured by one or more sensors from a perspective view to a BEV view. In other words, the system converts the coordinate system that the sensor data is represented in to a top-down coordinate system centered at the vehicle.

For example, when the sensor data includes LIDAR data represented as a point cloud, the BEV ground truth for a prediction time step can be a representation of the LIDAR points in the point cloud at the prediction time step in the BEV coordinate system. That is, the BEV ground truth can include some or all of the points in the point cloud represented in the BEV coordinate system.

As another example, when the sensor data includes LIDAR data, the BEV ground truth for a prediction time step can be perspective view features determined from the sensor data at the prediction time step lifted to the BEV coordinate system using depth colocation with the LIDAR points.

For each of the prediction time steps, the system also processes the respective sensor data at one or more preceding context time steps in the sequence using a future prediction neural network, which outputs a predicted BEV representation (step 206). Thus, although the input sensor data is in the perspective view, the future prediction neural network generates, as output, a prediction in the BEV representation. For example, the predicted BEV representation can be a prediction of a representation of the LIDAR points in a point cloud captured at the prediction time step in the BEV coordinate system. That is, the prediction can be a prediction of some or all of the points in the point cloud represented in the BEV coordinate system. As another example, the prediction can be the prediction of an appearance of perspective view features determined from the sensor data at the time step when lifted to the BEV coordinate system.

Optionally, the system can condition the predictions at the future time steps on a target location of the autonomous vehicle. That is the system can determine, for each prediction time step, a respective target position of the autonomous vehicle for the prediction time step and then condition the prediction for the future time step on the respective target position.

For example, the target position can be the same for each prediction time step. As a particular example of this, the target position for each prediction time step, can be the actual position of the autonomous vehicle at the last time step in the sequence, i.e., so that the predictions are conditioned on the actual final position of the autonomous vehicle at the end of the sequence. To account for motion of the origin of the BEV coordinate system between time steps, at each prediction time step, the actual position can be represented in a BEV coordinate system centered at a position of the autonomous vehicle at the prediction time step.

As another example, the target position can be different at different time steps. As a particular example of this, for each prediction time step, the respective target position of the autonomous vehicle can be a position of the autonomous vehicle at a following time step that is one or more time steps after the prediction time step in the sequence. Thus, the target position shifts to be the actual position a fixed number of time steps later than the prediction time step. To account for motion of the origin of the BEV coordinate system between time steps, at each prediction time step, the actual position can be represented in a BEV coordinate system centered at a position of the autonomous vehicle at the prediction time step.

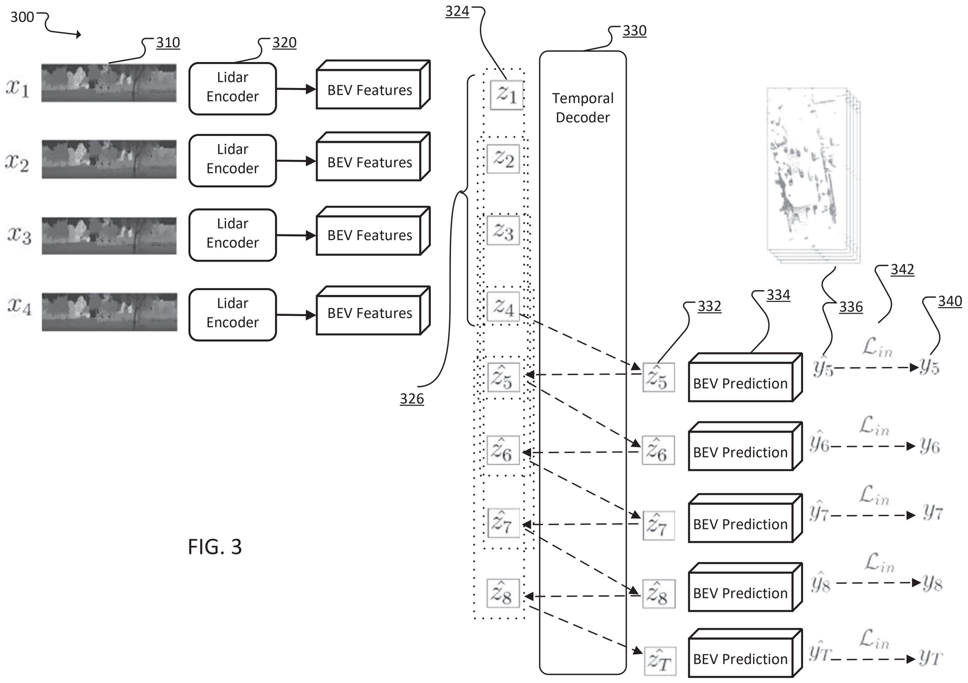

Processing the respective sensor data at one or more preceding time steps will be described in further detail below with reference to FIGS. 3, 4, and 5.

The system trains the future prediction neural network based on an error between the ground truth BEV representation and the predicted BEV representation for each of the prediction time steps (step 208).

The system can use a loss function to calculate the error between the ground truth BEV representation and the predicted BEV representation.

For instance, the loss function can be $\sum_{t=s}^{T}(\widehat{y}_t - y_t)^2$, where $s$ is the number of input frames + 1, $T$ is the total number of time steps in the sequence for the sensor data obtained in step 202, $\widehat{y}_t$ is the predicted BEV representation at the t-th time step in the sequence, and $y_t$ is the ground truth BEV representation at the t-th time step in the sequence.

Training a future prediction neural network is described in further detail below with reference to FIG. 3.

FIG. 3 shows an example future prediction neural network 300 training on input sensor data for a sequence of time steps. The future prediction neural network 300 first receives sensor data for a sequence of $T$ time steps. To generate a prediction for prediction time step, the future prediction neural network 300 takes in a number of input frames 310 determined by the width of a temporal window 326. That is, the width of the temporal window 326 is the number of context time steps that the future prediction neural network 300 bases its output prediction on. In this particular example, the future prediction neural network 300 has a temporal window 326 width of four, meaning that the future prediction neural network 300 can generate its output prediction based on four preceding context time steps. Accordingly, the example future prediction neural network 300 takes in four input frames $(x_1, x_2, x_3, x_4)$, which are the respective sensor data for each of the four time steps before the subsequent prediction time step.

Each input frame 310 is processed by a sensor encoder neural network 320 to generate an encoded representation 324 of the sensor data containing certain features.

As shown in the example of FIG. 3, for each of the context time steps, an input frame 310 of LIDAR sensor data is processed by a LIDAR Encoder 320 to generate an encoded representation 324, which contains BEV features. While only LIDAR sensor data is shown in FIG. 3, more generally, the system can process sensor data of types other than LIDAR sensor data, such as camera sensor data and radar sensor data, in addition to or instead of the LIDAR sensor data.

The sensor data encoder neural network 320 can have any of a variety of architectures.

For example, when the sensor data includes an image, e.g., a camera image or an image generated from LIDAR sensor data, the sensor data encoder can be a convolutional neural network, e.g., having a ResNet architecture, or a vision Transformer neural network. For example, the image generated from the LIDAR sensor data can be a representation of the LIDAR sensor data as a range image, where the value of any given pixel represents a range of a reflection at the location corresponding to the pixel, or a BEV image generated by representing the points in the BEV coordinate system.

As another example, when the sensor data includes LIDAR data, the sensor data encoder neural network 320 can be a sparse-lidar encoder that encodes the points in the point cloud. For example, the sparse-lidar encoder can have a Transformer architecture, e.g., a SWFormer-based architecture.

Taking the respective encoded representation 324 for each of the context time steps, a temporal decoder neural network 330 can generate a predicted encoded representation 332 for the prediction time step.

A prediction neural network 334 can further process the predicted encoded representation 332 to generate certain predicted features 336 for the prediction time steps.

More specifically, in the example of FIG. 3, the future prediction neural network 300 includes a temporal decoder 330 that takes in the encoded representations for four preceding time steps to generate $\widehat{z_5}$, a predicted encoded representation 332 of the subsequent time step. The temporal decoder 330 can generally have any appropriate architecture that maps the encoded representations for one or more preceding time steps to a predicted encoded representation at the next time step. For example, the temporal decoder neural network 330 can be a self-attention based neural network, e.g., one that has an architecture that is based on the Vision Transformer (ViT) architecture. As a particular example, the neural network 330 can be a Multi-axis Vision Transformer (MaxViT).

The predicted encoded representation is then further inputted into a prediction neural network 334 to generate $\widehat{y_5}$, which is the predicted BEV features 336 for the prediction time step.

The temporal decoder neural network 330 can take the predicted encoded representation 332 it generated as part of the input to generate a predicted encoded representation 332 for the next prediction time step. That is, the temporal decoder neural network 330 can shift the temporal window 326 down a time step in the sequence of time steps to include all but the first of the encoded representations 324 contained in the temporal window 326 and the predicted encoded representation 332 it generated, taking this as input for generating a predicted encoded representation 332 of the next prediction time step. The input to the temporal decoder neural network 330 can thus include encoded representations generated by the sensor-encoder neural network 320, the temporal decoder neural network 330, or both. For example, to generate $\widehat{z_6}$, a predicted encoded representation 332 for the sixth time step in the sequence, the temporal decoder neural network 330 can shift the temporal window 326 a time step down the sequence of time steps. The temporal window 326 therefore includes, as input to the temporal decoder neural network 330, the respective encoded representations for the second, third, fourth time steps and the predicted encoded representation 332 $\widehat{z_5}$ generated for the fifth time step. Once the temporal decoder neural network 330 generates a predicted encoded representation 332 for the sixth time step in the sequence, the temporal decoder neural network 330 can again shift the temporal window down one time step to generate the predicted encoded representation 332 for the seventh time step from the encoded representations 324 for the third and fourth time steps and the predicted encoded representations 332 for the fifth and sixth time steps. The temporal decoder neural network 300 performs this process repeatedly until it has generated the predicted encoded representation 332 for the last time step in the sequence.

For purposes of training the future prediction neural network 300, a training system such as that described in FIG. 1 determines a ground truth 340 of each of the prediction time steps for which the future prediction neural network 300 generated a predicted encoded representation. A ground truth 340 can be determined by converting the respective sensor data for the prediction time step into a common coordinate system as the predicted features for the prediction time step. As shown in the example of FIG. 3, both the ground truth 340 and the predicted features 336 are in BEV representation.

A training system can then determine the reconstruction loss 342 by finding the error between the ground truth and the predicted features for the prediction time step. The loss 342 can be calculated as described in FIG. 2. After finding the loss 342, the training system can then generate updated model parameters for the future prediction neural network 300 through methods such as backpropagation.

That is, the training system can backpropagate gradients of the reconstruction loss through the neural networks 334, 330, and 320 in order to train each of these neural networks.

In generating predictions of the future environment surrounding a vehicle, ambiguity exists in what actions both the vehicle and the other agents in the environment will do at the next prediction time step. For example, to generate a future frame prediction for a vehicle stopped at a stop sign at the current time step, there is ambiguity in whether the vehicle will turn left, turn right, or go straight, and what the other agents in the current frame will do, at the next time step. This ambiguity may cause the future prediction neural network to generate blurry feature predictions. To reduce this ambiguity and allow the future prediction neural network to generate clearer feature predictions for a future frame, input data corresponding to each time step can be conditioned with a target position of the vehicle.

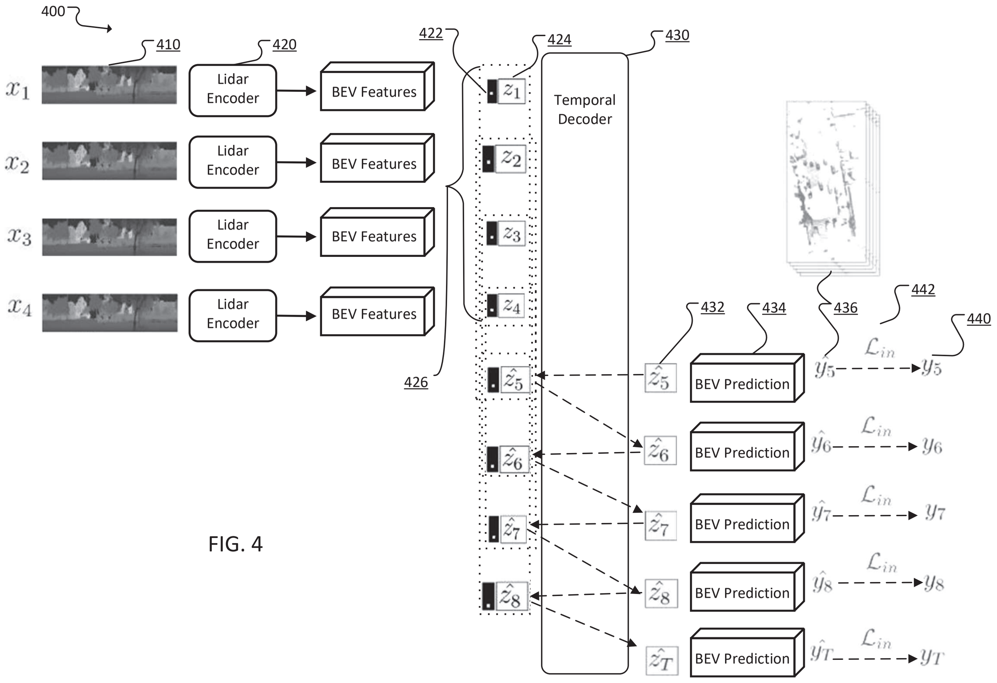

FIG. 4 shows an example future prediction neural network 400 training with additional target position data 422 of the vehicle at each respective context time step. Like the future prediction neural network in FIG. 3, the future prediction neural network 400 first receives sensor data for a sequence of T time steps, then processes each input frame 410 of sensor data at a time step with a sensor encoder neural network 420 to generate an encoded representation 424. As in FIG. 3, FIG. 4 shows each input frame 410 containing LIDAR sensor data processed by a LIDAR Encoder 420, though the type of sensor data in each input frame 410 and sensor encoder neural network 420 include data other than LIDAR, such as camera or radar, in addition or instead of the LIDAR data.

Input into the temporal decoder neural network 430, however, differs from that described in FIG. 3 in that for each context time step within a temporal window 426, the respective encoded representation 424 is conditioned with target position data 422 of the vehicle.

The target position data 422 of the vehicle used in conditioning each encoded representation 424 can be a different position of the vehicle at each respective context time step.

Alternatively, the target position data 422 of the vehicle used in conditioning each encoded representation 424 can be the same position of the vehicle at the final time step of the sequence of time steps in a training example.

The target position data 422 can be encoded in any of a variety of formats, such as an image or a vector, to be combined with the encoded representation 424 as input to the temporal decoder neural network 430. In the example of FIG. 4, the target position data 422 at each context time step is encoded as an image in the same BEV representation as the respective encoded representation 424. The target position data 422 can then, for instance, be concatenated with the encoded representation 424 of the respective context time step to form part of the input to the temporal decoder neural network 430.

The temporal decoder neural network 430 takes as input the combined target position data 422 and encoded representation 424 respective of each context time steps in the temporal window 426. The temporal decoder neural network 430 can then generate a predicted encoded representation 432 for a prediction time step that is the subsequent time step after the temporal window 426. After further processing the predicted encoded representation 432 by a prediction neural network 434, the future prediction neural network 400 outputs predicted features 436, such as predicted BEV features, for the respective prediction time step.

Because the temporal decoder neural network 430 generated the predicted encoded representation 432 with additional target position data 422 that reduced ambiguity in prediction, the resulting predicted features 436 produce a crisper image than predicted features generated without target position data conditioning on sensor data for each context time step.

The temporal decoder neural network 430 can generate a predicted encoded representation 432 for a next prediction time step by shifting the temporal window 426 to include the encoded representation 424 combined with the target position data 422 respective to each of the context time steps that immediately precede the next prediction time step. The input for each context time step within the temporal window 426 can thus include target position data 422 combined with encoded representations generated by the sensor-encoder neural network 420, the temporal decoder neural network 430, or both. A training system then generates the ground truth 440 for each prediction time step by converting the respective sensor data into the same representation as the predicted features. For example, the training system converts sensor data into BEV representation to generate ground truths 440 that can be compared to predicted BEV features 436. After calculating the loss 442 between the ground truths 440 and the predicted features 436 as described for FIG.2, the training system produces updated model parameters for the future prediction neural network 400, where all sensor encoder neural networks 420 share the same parameter weights, and all prediction neural networks 434 share the same parameter weights.

Another way to reduce ambiguity in generating future frame predictions is to leverage a discrete latent space for encoded representations of sensor data.

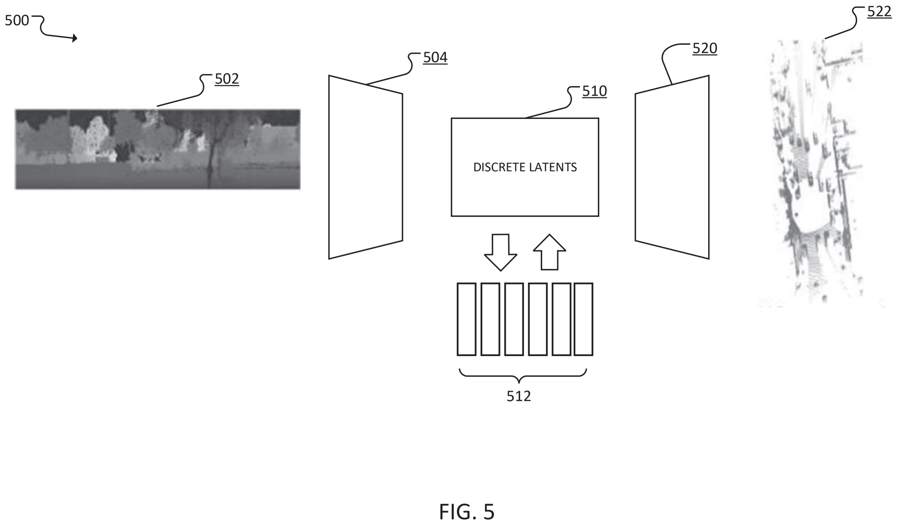

FIG. 5 shows an example future prediction neural network 500 that applies learned quantization to discrete encoded representations of sensor data 502.

The future prediction neural network 500 includes a sensor encoder neural network 504 that generates from the sensor data 502 at a given time step an initial encoded representation. The sensor encoder neural network 504 can, e.g., correspond to the encoder 320 of FIG. 3 or the encoder 420 of FIG. 4. Generally, the initial encoded representation will include a set of feature vectors in the BEV coordinate system. For example, the initial encoded representation can include a respective feature vector for each grid cell in a grid that is in the BEV coordinate system.

The future prediction neural network then applies a learned quantization 512 that generates a discrete latent representation 510 from the initial encoded representation. In particular, the learned quantization 512 maps the initial encoded representation to a discrete representation that includes, for each feature vector in the initial encoded representation, a corresponding code book vector selected from a codebook that includes a fixed, discrete number of codebook vectors. Making use of the discrete representation can, as described above, reduce blurriness in the representations caused by output ambiguity. For example, the learned quantization 512 can generate the discrete representation by selecting, for each feature vector in the initial encoded representation, the closest codebook vector to the feature vector.

For example, the learned quantization 512 can use a Vector-Quantized Variational Autoencoder (VQ-VAE) codebook or another learned quantization technique whose codebook vectors are learned jointly during the training of the future prediction neural network.

This discrete latent representation 510 of the sensor data can be inputted into a temporal decoder neural network 520 to generate predicted features 522, such as BEV features, for a prediction time step, as described above. Optionally, the discrete latent representation 510 can first be processed by one or more additional neural network layers, e.g., projection neural network layers or attention layers, before being provided as input to the temporal decoder neural network 520. Thus, as compared to the examples 300 and 400 shown in FIG. 3 and FIG. 4, in the example 500, the system applies an extra discretization bottleneck by making use of the discrete latent representation 510 before providing the encoded representations as input to the temporal decoder. As indicated above, making use of the discrete latent representation 510 can help reduce blurriness and ambiguity in the representations generated by the system.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, or a Jax framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

The specification includes the following subject-matter expressed in the form of clauses 1-23.

1. A method performed by one or more computers, the method comprising:

obtaining respective sensor data captured by one or more sensors of an autonomous vehicle at each of a sequence of time steps, the sequence of time steps comprising one or more context time steps followed by one or more prediction time steps;

generating respective ground truth birds eye view (BEV) representations of the respective sensor data for each of the prediction time steps;

for each prediction time step, processing the respective sensor data at one or more preceding time steps in the sequence using a future prediction neural network to generate a predicted BEV representation for the prediction time step; and

training the future prediction neural network based on, for each prediction time step, an error between the ground truth BEV representation for the prediction time step and the predicted BEV representation for the prediction time step.

2. The method of clause 1, wherein the future prediction neural network comprises a sensor encoder neural network, and wherein the processing comprises:

processing the sensor data at the time step using the sensor encoder neural network to generate an encoded representation of the sensor data.

3. The method of clause 2, wherein the future prediction neural network comprises a temporal decoder neural network, and wherein processing the respective sensor data at one or more preceding time steps in the sequence using a future prediction neural network to generate predicted BEV features for the prediction time step comprises:

processing an input comprising the respective encoded representation of the sensor data at each of the one or more preceding time steps using the temporal decoder neural network to generate a predicted encoded representation for the prediction time step.

4. The method of clause 3, wherein the future prediction neural network comprises a prediction neural network, and wherein processing the respective sensor data at one or more preceding time steps in the sequence using a future prediction neural network to generate predicted BEV features for the prediction time step comprises:

processing the predicted encoded representation for the prediction time step using the prediction neural network to generate the predicted BEV features for the prediction time step.

5. The method of clause 3 or 4, wherein the respective encoded representation of the sensor data comprises BEV features.

6. The method of any of clauses 3-5, further comprising:

determining, for each prediction time step, a respective target position of the autonomous vehicle for the prediction time step, wherein the input comprising the respective encoded representation of the sensor data at each of the one or more preceding time steps further comprises an encoding of the respective target position of the autonomous vehicle.

7. The method of clause 6, wherein, for each prediction time step, the respective target position of the autonomous vehicle is a position of the autonomous vehicle at a last time step in the sequence represented in a BEV coordinate system centered at a position of the autonomous vehicle at the prediction time step.

8. The method of clause 6, wherein, for each prediction time step, the respective target position of the autonomous vehicle is a position of the autonomous vehicle at a following time step that is one or more time steps after the prediction time step in the sequence represented in a BEV coordinate system centered at a position of the autonomous vehicle at the prediction time step.

9. The method of any of clauses 2-8, wherein the encoded representation of the sensor data is a discrete representation and wherein processing the sensor data at the time step using the sensor encoder neural network to generate an encoded representation of the sensor data comprises:

processing the sensor data at the time step using the sensor encoder neural network to generate an initial encoded representation of the sensor data; and

applying a learned quantization to the initial encoded representation to generate the encoded representation of the sensor data.

10. The method of any of clauses 1-9, wherein the sensor data comprises lidar sensor data captured by one or more lidar sensors.

11. The method of clause 10, wherein the lidar sensor data is represented as a range image or a BEV image.

12. The method of any of clauses 1-11, wherein the sensor data comprises image data captured by one or more camera sensors.

13. The method of any of clauses 1-12, wherein the sensor data comprises radar data captured by one or more radar sensors.

14. A system comprising one or more computers and one or more storage devices storing instructions that when executed by the one or more computers cause the one or computers to perform operations comprising:

    obtaining respective sensor data captured by one or more sensors of an autonomous vehicle at each of a sequence of time steps, the sequence of time steps comprising one or more context time steps followed by one or more prediction time steps;
    generating respective ground truth birds eye view (BEV) representations of the respective sensor data for each of the prediction time steps;
    for each prediction time step, processing the respective sensor data at one or more preceding time steps in the sequence using a future prediction neural network to generate a predicted BEV representation for the prediction time step; and
    training the future prediction neural network based on, for each prediction time step, an error between the ground truth BEV representation for the prediction time step and the predicted BEV representation for the prediction time step.

15. The system of clause 14, wherein the future prediction neural network comprises a sensor encoder neural network, and wherein the processing comprises:
processing the sensor data at the time step using the sensor encoder neural network to generate an encoded representation of the sensor data.

16. The system of clause 15, wherein the future prediction neural network comprises a temporal decoder neural network, and wherein processing the respective sensor data at one or more preceding time steps in the sequence using a future prediction neural network to generate predicted BEV features for the prediction time step comprises:
processing an input comprising the respective encoded representation of the sensor data at each of the one or more preceding time steps using the temporal decoder neural network to generate a predicted encoded representation for the prediction time step.

17. The system of clause 16, wherein the future prediction neural network comprises a prediction neural network, and wherein processing the respective sensor data at one or more preceding time steps in the sequence using a future prediction neural network to generate predicted BEV features for the prediction time step comprises:
processing the predicted encoded representation for the prediction time step using the prediction neural network to generate the predicted BEV features for the prediction time step.

18. The system of clause 16 or 17, wherein the respective encoded representation of the sensor data comprises BEV features.

19. The system of any of clauses 16-18, further comprising:
determining, for each prediction time step, a respective target position of the autonomous vehicle for the prediction time step, wherein the input comprising the respective encoded representation of the sensor data at each of the one or more preceding time steps further comprises an encoding of the respective target position of the autonomous vehicle.

20. One or more non-transitory computer storage media storing instructions that when executed by one or more computers cause the one or more computers to perform operations comprising:

    obtaining respective sensor data captured by one or more sensors of an autonomous vehicle at each of a sequence of time steps, the sequence of time steps comprising one or more context time steps followed by one or more prediction time steps;
    generating respective ground truth birds eye view (BEV) representations of the respective sensor data for each of the prediction time steps;
    for each prediction time step, processing the respective sensor data at one or more preceding time steps in the sequence using a future prediction neural network to generate a predicted BEV representation for the prediction time step; and
    training the future prediction neural network based on, for each prediction time step, an error between the ground truth BEV representation for the prediction time step and the predicted BEV representation for the prediction time step.

21. A system comprising one or more computers and one or more storage devices storing instructions that when executed by the one or more computers cause the one or computers to perform operations comprising the method of any of clauses 1-13.

22. One or more non-transitory computer storage media storing instructions that when executed by one or more computers cause the one or more computers to perform operations comprising the method of any of clauses 1-13.

23. Computer readable instructions that when executed by one or more computers cause the one or more computers to perform operations comprising the method of any of clauses 1-13.

**Claims**

1. A method performed by one or more computers, the method comprising:

   obtaining respective sensor data captured by one or more sensors of an autonomous vehicle at each of a sequence of time steps, the sequence of time steps comprising one or more context time steps followed by one or more prediction time steps;
   generating respective ground truth birds eye view (BEV) representations of the respective sensor data for each of the prediction time steps;
   for each prediction time step, processing the respective sensor data at one or more preceding time steps in the sequence using a future prediction neural network to generate a predicted BEV representation for the prediction time step; and
   training the future prediction neural network based on, for each prediction time step, an error between the ground truth BEV representation for the prediction time step and the predicted BEV representation for the prediction time step.

2. The method of claim 1, wherein the future prediction neural network comprises a sensor encoder neural network, and wherein the processing comprises:
   processing the sensor data at the time step using the sensor encoder neural network to generate an encoded representation of the sensor data.

3. The method of claim 2, wherein the future prediction neural network comprises a temporal decoder neural network, and wherein processing the respective sensor data at one or more preceding time steps in the sequence using a future prediction neural network to generate predicted BEV features for the prediction time step comprises:
   processing an input comprising the respective encoded representation of the sensor data at each of the one or more preceding time steps using the temporal decoder neural network to generate a predicted encoded representation for the prediction time step.

4. The method of claim 3, wherein the future prediction neural network comprises a prediction neural network, and wherein processing the respective sensor data at one or more preceding time steps in the sequence using a future prediction neural network to generate predicted BEV features for the prediction time step comprises:
   processing the predicted encoded representation for the prediction time step using the prediction neural network to generate the predicted BEV features for the prediction time step.

5. The method of claim 3 or 4, wherein the respective encoded representation of the sensor data comprises BEV features.

6. The method of any of claims 3-5, further comprising:
   determining, for each prediction time step, a respective target position of the autonomous vehicle for the prediction time step, wherein the input comprising the respective encoded representation of the sensor data at each of the one or more preceding time steps further comprises an encoding of the respective target position of the autonomous vehicle.

7. The method of claim 6, wherein, for each prediction time step, the respective target position of the autonomous vehicle is a position of the autonomous vehicle at a last time step in the sequence represented in a BEV coordinate system centered at a position of the autonomous vehicle at the prediction time step.

8. The method of claim 6, wherein, for each prediction time step, the respective target position of the autonomous vehicle is a position of the autonomous vehicle at a following time step that is one or more time steps after the prediction time step in the sequence represented in a BEV coordinate system centered at a position of the autonomous vehicle at the prediction time step.

9. The method of any of claims 2-8, wherein the encoded representation of the sensor data is a discrete representation and wherein processing the sensor data at the time step using the sensor encoder neural network to generate an encoded representation of the sensor data comprises:

   processing the sensor data at the time step using the sensor encoder neural network to generate an initial encoded representation of the sensor data; and
   applying a learned quantization to the initial encoded representation to generate the encoded representation of the sensor data.

10. The method of any of claims 1-9, wherein the sensor data comprises lidar sensor data captured by one or more lidar sensors.

11. The method of claim 10, wherein the lidar sensor data is represented as a range image or a BEV image.

12. The method of any of claims 1-11, wherein the sensor data comprises image data captured by one or more camera sensors.

13. The method of any of claims 1-12, wherein the sensor data comprises radar data captured by one or more radar sensors.

14. A system comprising one or more computers and one or more storage devices storing instructions that when executed by the one or more computers cause the one or computers to perform operations comprising the method of any of claims 1-13.

15. One or more non-transitory computer storage media storing instructions that when executed by one or more computers cause the one or more computers to perform operations comprising the method of any of claims 1-13.

FIG. 1

200

202
OBTAIN SENSOR DATA AT A SEQUENCE OF TIME STEPS

204
GENERATE GROUND TRUTH BIRDS EYE VIEW (BEV) REPRESENTATIONS OF THE RESPECTIVE SENSOR DATA FOR EACH OF THE PREDICTION TIME STEPS

206
FOR EACH OF THE PREDICTION TIME STEPS, PROCESS THE RESPECTIVE SENSOR DATA AT ONE OR MORE PRECEDING TIME STEPS TO GENERATE A PREDICTED BEV REPRESENTATION USING A FUTURE PREDICTION NEURAL NETWORK

208
TRAIN THE FUTURE PREDICTION NEURAL NETWORK BASED ON, FOR EACH PREDICTION TIME STEP, AN ERROR BETWEEN THE GROUND TRUTH BEV REPRESENTATION AND THE PREDICTED BEV REPRESENTATION

FIG. 2

FIG. 3

EP 4 760 597 A1

FIG. 4

FIG. 5

Europäisches
Patentamt

European
Patent Office

Office européen
des brevets

# EUROPEAN SEARCH REPORT

**Application Number**

EP 25 22 3696

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI PEIDONG ET AL: "NAVIGATION-GUIDED SPARSE SCENE REPRESENTA-TION FOR END-TO-END AUTONOMOUS DRIVING", ICLR 2025, 25 September 2024 (2024-09-25), pages 1-17, XP093374304, Retrieved from the Internet: URL:https://arxiv.org/abs/2409.18341> * the whole document * | 1-15 | INV. G06N3/045 G06N3/047 G06N3/0475 G06N3/0495 G06N3/084 G06N3/0895 ADD. G01S17/931 G06V10/82 G06V20/56 |
| X | YU YANG ET AL: "Driving in the Occupancy World: Vision-Centric 4D Occupancy Forecasting and Planning via World Models for Autonomous Driving", ARXIV.ORG CORNELL UNIVERSITY LIBRARY, 201 OLIN LIBRARY CORNELL UNIVERSITY ITHACA, NY 14853, 26 August 2024 (2024-08-26), XP091860520, * the whole document * | 1-15 | |
| X | GAO SHUANG ET AL: "Forecasting Semantic Bird-Eye-View Maps for Autonomous Driving", 2024 IEEE INTELLIGENT VEHICLES SYMPOSIUM (IV) IEEE, 2 June 2024 (2024-06-02), pages 509-514, XP034641116, DOI: 10.1109/IV55156.2024.10588762 [retrieved on 2024-07-15] * the whole document * | 1-15 | **TECHNICAL FIELDS SEARCHED (IPC)** G06N G01S G06F G06V |

-/--

The present search report has been drawn up for all claims

| Place of search | Date of completion of the search | Examiner |
|---|---|---|
| The Hague | 8 April 2026 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

## EUROPEAN SEARCH REPORT

Application Number

EP 25 22 3696

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FANG SHAOHENG ET AL: "TBP-Former: Learning Temporal Bird's-Eye-View Pyramid for Joint Perception and Prediction in Vision-Centric Autonomous Driving", 2023 IEEE/CVF CONFERENCE ON COMPUTER VISION AND PATTERN RECOGNITION (CVPR) IEEE, 17 June 2023 (2023-06-17), pages 1368-1378, XP034403026, DOI: 10.1109/CVPR52729.2023.00138 [retrieved on 2023-08-22] * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 8 April 2026 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)